# EUROPEAN PATENT SPECIFICATION

(11) **EP 3 935 317 B1**
(45) Date of publication and mention of the grant of the patent: **29.03.2023**
(21) Application number: 20707434.5
(22) Date of filing: 28.02.2020
(51) Int. Cl.: F24D 10/00, F24D 19/10

(54) **A METHOD AND A SERVER FOR VERIFYING A PHYSICAL CONNECTION OF AN UNVERIFIED THERMAL DEVICE TO A SPECIFIC COMBINED DISTRICT HEATING AND COOLING SYSTEM**
VERFAHREN UND SERVER ZUR VERIFIZIERUNG EINER PHYSIKALISCHEN VERBINDUNG EINER NICHTVERIFIZIERTEN THERMISCHEN VORRICHTUNG MIT EINEM SPEZIFISCHEN KOMBINIERTEN FERNWÄRME- UND -KÄLTESYSTEM
PROCÉDÉ ET SERVEUR POUR VÉRIFIER UNE CONNEXION PHYSIQUE D'UN DISPOSITIF THERMIQUE NON VÉRIFIÉ À UN SYSTÈME COMBINÉ SPÉCIFIQUE DE CHAUFFAGE URBAIN ET DE REFROIDISSEMENT

(30) Priority: 05.03.2019 EP 19160794
(43) Date of publication of application: 12.01.2022
(73) Proprietor: E.ON Sverige AB, 205 09 Malmö (SE)
(72) Inventor: ROSÉN, Per, 227 33 Lund (SE); SKOGSTRÖM, Jacob, 234 42 Lomma (SE); ROSENQVIST, Fredrik, 254 51 Helsingborg (SE); LINDOFF, Bengt, 237 35 Bjärred (SE)
(74) Representative: AWA Sweden AB
(86) International application number: PCT/EP2020/055229
(87) International publication number: WO 2020/178157

(56) References cited:
- WO-A1-2010/145040
- WO-A1-2018/015125
- WO-A1-2018/015508
- CN-B- 104 214 520

## Description

### Field of the invention

The invention relates a combined district heating and cooling system, especially the invention relates to how to verify that a thermal device is connected to a specific combined district heating and cooling system.

### Background of the invention

Today, it is common practice in many parts of the world to provide heating and hot water for houses and buildings via an energy grid. One example of such energy grid is a district heating grid comprising a system of conduits and valves for distributing hot water to the houses and buildings such that the houses can be heated when needed. Alternatively, according to another example, instead of using hot water for providing space heating, gas may be provided to the houses and buildings via the system. By having access to gas, typically a fossil fuel gas, the house can be heated by using a gas burner. In addition to space heating, the hot water or the gas may be used for preparing the hot tap water.

To cool the houses and buildings, similar systems may be used. The general principle of these systems is however the opposite. Instead of providing heat by e.g. providing hot water, heat is collected in the houses and transported away from the houses. District cooling grids, that is, networks of conduits and valves connecting several real estates for cooling purposes, using water as heat carrier are however still rare. The common practice is instead to use electrical energy for running air conditioning systems, which is a disadvantage at least from an environmental perspective.

Examples of using combined district heating and cooling system are known. For instance, in WO2017/108561 filed by E.ON Sverige AB. These combined systems utilize heat pumps for energy efficient heating and cooling of buildings. Document CN104214520 B discloses a heating/cooling pipeline system where pressure differences between two different measuring points are determined. The pressure differences are used to indicate if something is wrong with the system, such as blocked pipeline or broken pipes. More precisely, a difference between a theoretical pressure difference and an actual pressure difference is compared with a permissible deviation range in order to determine if something is wrong in the system.

Even though it is today known to use combined district heating and cooling systems to provide e.g. space heating and space cooling, these can be further improved. One area of improvement is efficient system maintenance and control of thermal devices connected to the combined district heating and cooling system. Typically, a central control function is available for a combined district heating and cooling system. The central control function is configured to individually controlling the different thermal devices connected to the combined district heating and cooling system.

Sometimes a plurality of combined district heating and cooling system will be installed in a particular geographical area. The central control function controlling a respective combined district heating and cooling system need to be in control of the thereto connected thermal devices. Hence, it is important that the central control function knows which thermal devices that is connected to which combined district heating and cooling system.

### Summary of the invention

It is an object of the present invention to solve at least some of the problems mentioned above.

According to a first aspect, a method for verifying a physical connection of an unverified thermal device to a specific combined district heating and cooling system is provided, and defined in claim 1.

The specific combined district heating and cooling system comprises a hot fluid conduit for transporting hot fluid, and a cold fluid conduit for transporting cold fluid, wherein, during operation, the hot fluid is warmer than the cold fluid. The method comprises:
receiving, from a verified thermal device already verified as physically connected to the specific combined district heating and cooling system, reference data pertaining to a physical characteristic associated to the specific combined district heating and cooling system, wherein the reference data is measured by one or more sensors associated to the verified thermal device;
receiving, from the unverified thermal device, test data pertaining to a physical characteristic of a combined district heating and cooling system the unverified thermal device is connected to, wherein the test data is measured by one or more sensors associated to the unverified thermal device;
determining a comparison criterion based on the reference data; and comparing the test data and the comparison criterion;
upon the comparison fulfills the comparison criterion, verifying that the unverified thermal device is physically connected to the specific combined district heating and cooling system.

The term "physical connection" refers to, in the context of the combined district heating and cooling system, that the respective thermal device is fluidly connected to a combined district heating and cooling system.

By the present method newly connected thermal devices can be verified to be connected to a specific combined district heating and cooling system and hence be attributed to be controlled by the "correct" central control function. Thereby an improved efficiency of the control of the newly connected thermal device and the specific combined district heating and cooling system may be achieved. This since the central control function has knowledge of which thermal device is connected to which combined district heating and cooling system. Further, the method may also be used for verifying correct function/correct connection of already verified thermal devices via performing the disclosed verification on a regular basis. Hence, on a regular basis, e.g. once a day, once a week, once a month, an already physically connected and verified thermal device may be set as unverified and the disclosed verification method may be run. In this manner thermal devices with a problem can be detected. This may enhance efficiency of the control of the thermal device and the specific combined district heating and cooling system. Since the comparisons between the test data and the reference data may be conducted centrally, the need for doing measurements and verifications locally at the thermal devices may be reduced. Thereby man hours and cost may be saved in troubleshooting the combined district heating and cooling system.

Upon the comparison does not fulfill the comparison criterion, the method may further comprise remaining the unverified thermal device as unverified. In connection with this, an error message may be sent to an operator. Alternatively, the verification method may be run again but this time reference data pertaining to a physical characteristic associated to another specific combined district heating and cooling system received from a verified thermal device already verified as physically connected to the another specific combined district heating and cooling system will be used.

The physical characteristic may be one or more of: a local fluid differential pressure between the hot and the cold conduits, a local fluid temperature of the hot fluid conduit, a local fluid temperature of the cold fluid conduit, a local fluid flow of the hot fluid conduit, a local fluid flow of the cold fluid conduit and a percentage of a substance in the fluid of the combined district heating and cooling system. In this context "local" is to be interpreted as being measured at the respective thermal device. This may be done by one or more sensors arranged in the respective thermal device. Alternatively, or in combination, this may be done by one or more sensors arranged in the hot fluid conduit and/or cold fluid conduit. The one or more sensors is in this case arranged close to a connection between the respective thermal device and the hot fluid conduit and/or cold fluid conduit. In this context "close" is to be interpreted as being sufficiently close to the respective thermal device so that the measurement may be said to be representative for the respective thermal device.

The verified thermal device may be one of a thermal energy consumer assembly, a thermal energy generator assembly, a combined thermal energy consumer and generator assembly or a thermal server plant, wherein the verified thermal device comprises a sensor configured to measure the physical characteristic associated to the specific combined district heating and cooling system.

The comparison criterion may be defined as an interval based on the reference data.

The reference data may further comprise a reference geographic location of the verified thermal device and the test data may further comprise a test geographic location of the unverified thermal device. An increased accuracy in the verification may hence be achieved. This since the distance between the unverified thermal device and the verified thermal device may be taken into account.

The act of receiving, from a verified thermal device already verified as physically connected to the specific combined district heating and cooling system, reference data pertaining to a physical characteristic associated to the specific combined district heating and cooling system may comprise:
receiving reference data, from a plurality of verified thermal devices already verified as physically connected to the specific combined district heating and cooling system;
comparing the test geographic location of the unverified thermal device with the reference geographic location of each of the plurality of verified thermal devices; and
identifying the verified thermal device among the plurality of verified thermal device being the one geographically closest to the unverified thermal device as the verified thermal device.

The reference data may pertain to a plurality of physical characteristics associated to the specific combined district heating and cooling system. The test data may pertain to a plurality of physical characteristics of the combined district heating and cooling system the unverified thermal device is connected to. An increased accuracy in the verification may hence be achieved. This since many different physical characteristics may be taken into account.

According to a second aspect, it is provided a server to verify a physical connection of an unverified thermal device to a specific combined district heating and cooling system. This server is defined in claim 9 and comprises :
a transceiver configured to:
   from a verified thermal device physically connected to the specific combined district heating and cooling system, receive reference data pertaining to a physical characteristic associated to the specific combined district heating and cooling system, wherein the reference data is measured by one or more sensors associated to the verified thermal device;
   from an unverified thermal device, receive test data pertaining to a physical characteristic of the combined district heating and cooling system the unverified thermal device is connected to, wherein the test data is measured by one or more sensors associated to the unverified thermal device; and
a control circuit configured to execute:
   a determination function configured to determine a comparison criterion based on the reference data;
   a comparison function configured to compare the test data with the comparison criterion, and upon the comparison fulfills the comparison criterion, verify that the unverified thermal device is physically connected to the specific combined district heating and cooling system.

The transceiver may further be configured to, from each of a plurality of verified thermal devices connected to the specific combined district heating and cooling system, receive the reference data, wherein the reference data may further comprise a reference geographic location of the verified thermal device;
wherein the test data further comprises a test geographic location of the unverified thermal device; and
wherein the control circuit is further configured to execute:
   a comparing function configured to compare the test geographic location of the unverified thermal device with the reference geographic location of each of the plurality of verified thermal devices; and
   an identifying function configured to identify the verified thermal device among the plurality of verified thermal device being the one geographically closest to the unverified thermal device as the verified thermal device.

The above mentioned features of the method, when applicable, apply to this third aspect as well. In order to avoid undue repetition, reference is made to the above.

According to a third aspect, a non-transitory computer readable recording medium is provided. The non-transitory computer readable recording medium may have computer readable program code recorded thereon which when executed on a device having processing capability is configured to perform the method of any one of the previous aspects.

The above mentioned features of the method, when applicable, apply to this third aspect as well. In order to avoid undue repetition, reference is made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a," "an, " "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numerals refer to like elements throughout.
Fig. 1 is a schematic diagram of a combined district heating and cooling system.
Fig. 2 illustrates a principle sketch of a combined district heating and cooling system wherein an unverified thermal device is connected.
Fig. 3 is a schematic diagram of a server configured to verify a correct physical connection of a thermal device to a combined district heating and cooling system of Fig. 1.
Fig. 4 is a flow chart of a method for verifying that a thermal device is physically connected to a specific combined district heating and cooling system.
Fig. 5a-c illustrates different examples of a composition of combined district heating and cooling systems.

### Detailed description

The present invention will now be described more fully hereinafter with reference to the accompanying drawings, in which currently preferred embodiments are the invention are shown. This invention may, however, be embodied in many different forms and should not be construed as limited to the embodiments set forth herein; rather, these embodiments are provided for thoroughness and completeness, and to fully convey the scope of the invention to the skilled person.

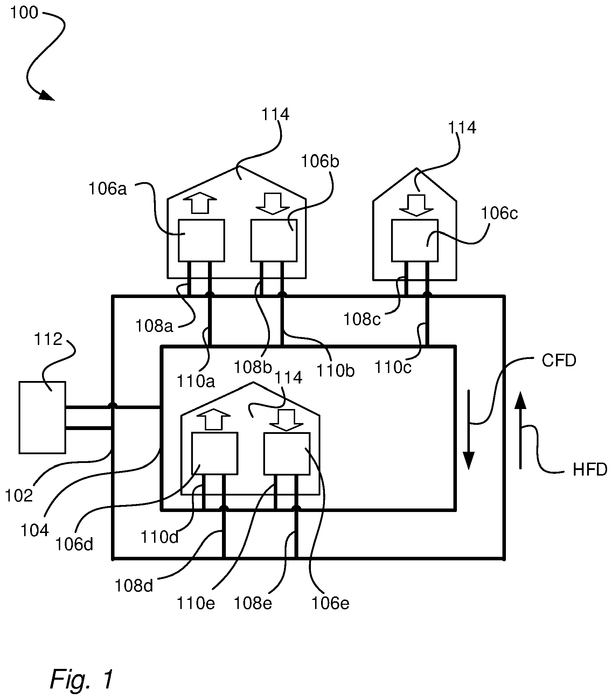

Figure 1 generally illustrates a combined district heating and cooling system 100. The system 100 can utilize heat pumps for energy efficient heating and/or cooling of buildings. As illustrated, the system 100 comprises a thermal energy circuit and a plurality of buildings 114. The plurality of buildings 114 can be thermally coupled to the thermal energy circuit, which can be arranged to circulate and store thermal energy in heat transfer fluid flowing through the thermal energy circuit.

By way of example, the heat transfer fluid comprises water. However, according to another example, other heat transfer fluids may be used. Some non-limiting examples are ammonia, oils, alcohols and anti-freezing fluids such as glycol. The heat transfer fluid may also comprise a mixture of two or more of the heat transfer fluids mentioned above.

The thermal energy circuit comprises a hot fluid conduit 102 for transporting hot fluid in a hot fluid direction HFD and a cold fluid conduit 104 for transporting cold fluid in a cold fluid direction CFD. The HFD may be opposite to the CFD. The HFD may vary over time. The CFD may vary over time.

The hot fluid conduit 102 is configured to allow heat transfer fluid of a hot fluid temperature to flow there through. The cold fluid conduit 104 is configured to allow heat transfer fluid of a cold fluid temperature to flow there through. The cold fluid temperature is lower than the hot fluid temperature.

The hot fluid conduit 102 and the cold fluid conduit 104 are separated. The hot fluid conduit 102 may be arranged as a closed loop of piping. The cold fluid conduit 104 may be arranged as a closed loop of piping. The hot fluid flow conduit 102 may be arranged as an open loop of piping. The cold fluid conduit 104 may be arranged as an open loop of piping. The hot fluid conduit 102 and the cold fluid conduit 104 are fluidly interconnected at thermal devices 106a-f in the plurality of buildings 114. This in order for allowing of thermal energy transfer to and from the plurality of buildings 114. A differential pressure between heat transfer fluid of the hot fluid conduit 102 and heat transfer fluid of the cold fluid conduit 104 are allowed to vary over time. Especially, sometimes the pressure of heat transfer fluid of the hot fluid conduit 102 is higher than the pressure of heat transfer fluid of the cold fluid conduit 104 and other times it is vice versa.

Each of the two fluid conduits 102, 104, of the thermal energy circuit may be formed by plastics, composite, concrete or metal pipes. By way of example, High Density Polyethylene (HDPE) pipes may be used. The pipes may be single wall pipes. The pipes may be un-insulated. The different fluid conduits 102, 104 may be formed by the same material. The different fluid conduits 102, 104 may be formed by different material

In this particular system, (in case the heat transfer liquid is water) the hot fluid temperature in the hot fluid conduit is in the range of 5-50, preferably 10-40, degrees Celsius and the cold fluid temperature in the cold fluid conduit is in the range of 1-45, preferably 5-35, degrees Celsius. The difference in temperature between the hot fluid temperature and the cold fluid temperature may be in the range of 1-25, preferably 2-15, most preferably 5-10, degrees Celsius.

Each of building 114 comprises a thermal devices 106a-e. Each thermal device 106a-e is connected to the hot fluid conduit 102 via a hot fluid connection conduit 108a-f and to the cold fluid conduit 104 via a cold fluid connection conduit 110a-f.

In order to balance the thermal energy within the combined district heating and cooling system 100, the system 100 may further comprise a thermal server plant 112. The thermal server plant 112 functions as an external thermal source and/or thermal sink. The function of the thermal server plant 112 is to maintain the temperature difference between the hot and cold fluid conduits 102, 104 of the thermal energy circuit. The function of the thermal server plant 112 may further be to regulate the pressure difference between the hot and cold fluid conduits 102, 104 of the thermal energy circuit.

The thermal devices 106a-e is categorized into thermal energy consumer assemblies, thermal energy generator assemblies, combined thermal energy consumer/generator assemblies and the thermal server plant 112.

A thermal energy consumer assembly is arranged to transfer thermal energy from heat transfer liquid of the thermal energy circuit to surroundings of the thermal energy consumer assembly. This is achieved by transferring thermal energy from heat transfer liquid taken from the hot fluid conduit 102 to surroundings of the thermal energy consumer assembly such that heat transfer liquid returned to the cold fluid conduit 104 has a temperature lower than the hot fluid temperature and preferably a temperature equal to the cold fluid temperature.

A thermal energy generator assembly is configured to transfer thermal energy from its surroundings to heat transfer liquid of the thermal energy circuit. This is achieved by transfer thermal energy from surroundings of the thermal energy generator assembly to heat transfer liquid taken from the cold fluid conduit 104, such that heat transfer liquid returned to the hot fluid conduit 102 has a temperature higher than the cold fluid temperature and preferably a temperature equal to the hot fluid temperature.

Alternatively, the thermal devices 106a-e may be a combined thermal energy consumer/generator assembly. The combined thermal energy consumer/generator assembly is configured to at some points in time act as a thermal energy consumer assembly and other points in time act as a thermal energy generator assembly. Such a combined thermal energy consumer and generator assembly is further described in EP18172779 by E.ON Sverige AB.

Each building 114 comprises at least one of one or more thermal energy consumer assemblies, one or more thermal energy generator assemblies and one or more combined thermal energy consumer/generator assemblies. Hence, each building comprises at least one thermal energy consumer assembly, at least one thermal energy generator assembly, or at least one combined thermal energy consumer/generator assembly. One specific building 114 may comprise more than one assembly of the same or different kind.

The thermal energy consumer assembly may be installed in the building 114 as a local heater for different heating needs. As a non-limiting example, a local heater may be arranged to deliver space heating and/or hot tap water preparation. Alternatively, or in combination, the local heater may deliver pool heating and/or ice- and snow purging. Hence, the thermal energy consumer assembly is arranged for deriving heat from heat transfer fluid of the hot fluid conduit 102 and creating a cooled heat transfer fluid flow into the cold fluid conduit 104. Hence, the thermal energy consumer assembly fluidly interconnects the hot and cold fluid conduits 102, 104, such that hot heat transfer fluid can flow from the hot fluid conduit 102 through the thermal energy consumer assembly and then into the cold fluid conduit 104 after thermal energy in the heat transfer fluid has been consumed by the thermal energy consumer assembly. The thermal energy consumer assembly operates to draw thermal energy from the hot fluid conduit 102 to heat the building 114 and then deposits the cooled heat transfer fluid into the cold fluid conduit 104. The thermal energy consumer assembly is selectively connected to the hot fluid conduit 102 via a valve and a pump. Depending on the differential pressure between heat transfer fluid of the hot fluid conduit 102 and heat transfer fluid of the cold fluid conduit 104 sometimes heat transfer fluid from the hot fluid conduit 102 needs to flow into the thermal energy consumer assembly and other times heat transfer fluid from the hot fluid conduit 102 needs to be pumped into the thermal energy consumer assembly. Upon selecting the connection of the thermal energy consumer assembly to the hot fluid conduit 102 to be via the valve, heat transfer fluid from the hot fluid conduit 102 is allowed to flow into the thermal energy consumer assembly. Upon selecting the connection of the thermal energy consumer assembly to the hot fluid conduit 102 to be via the pump, heat transfer fluid from the hot fluid conduit 102 is pumped into the thermal energy consumer assembly.

The thermal energy generator assembly may be installed in the building 114 as a local cooler for different cooling needs. As a non-limiting example a local cooler may be arranged to deliver space cooling and/or cooling for freezers and refrigerators. Alternatively, or in combination, the local cooler may deliver cooling for ice rinks and/or ski centers and/or ice- and snow making. Hence, the thermal energy generator assembly is deriving cooling from heat transfer fluid of the cold fluid conduit 104 and creating a heated heat transfer fluid flow into the hot fluid conduit 102. Hence, the thermal energy generator assembly fluidly interconnects the hot and cold fluid conduits 102, 104, such that cold heat transfer fluid can flow from the cold fluid conduit 104 through the thermal energy generator assembly and then into the hot fluid conduit 102 after thermal energy has been generated into the heat transfer fluid by the thermal energy generator assembly. The thermal energy generator assembly operates to extract heat from the building 114 to cool the building 114 and deposits that extracted heat into the hot fluid conduit 102. The thermal energy generator assembly is selectively connected to the cold fluid conduit 104 via a valve and a pump. Depending on the differential pressure between heat transfer fluid of the hot fluid conduit 102 and heat transfer fluid of the cold fluid conduit 104 sometimes heat transfer fluid from the cold fluid conduit 102 needs to flow into the thermal energy generator assembly and other times heat transfer fluid from the cold fluid conduit 104 needs to be pumped into the thermal energy generator assembly. Upon selecting the connection of the thermal energy generator assembly to the cold fluid conduit 104 to be via the valve, heat transfer fluid from the cold fluid conduit 104 is allowed to flow into the thermal energy generator assembly. Upon selecting the connection of the thermal energy generator assembly to the cold fluid conduit 104 to be via the pump, heat transfer fluid from the cold fluid conduit 104 is pumped into the thermal energy generator assembly.

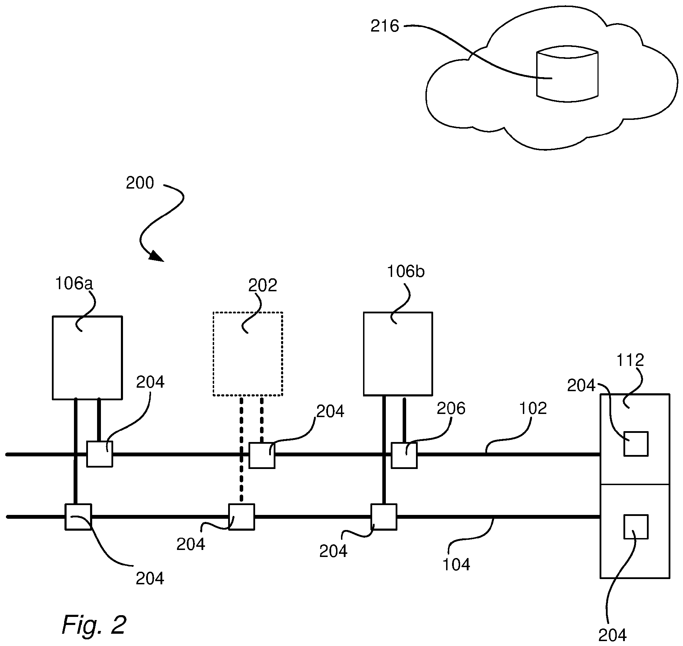

Fig. 2 illustrates a principle sketch of a section 200 of the combined district heating and cooling system 100. An unverified thermal device 202 is connected to the combined district heating and cooling system 100. The unverified thermal device 202 may have a status as unverified.

In line with the combined district heating and cooling system 100 illustrated in Fig. 1, the section 200 comprises the hot fluid conduit 102 and the cold fluid conduit 104. The unverified thermal device 202 may be physically connected to the hot and cold fluid conduits 102, 104 of combined district heating and cooling system 100. The unverified thermal device 202 comprises one or more sensors 204 associated with the unverified thermal device 202. The one or more sensors 204 are configured to measure a physical characteristic associated to the combined district heating and cooling system 100 to which the unverified thermal device 202 is connected.

Further, one or more verified thermal devices 106a, 106b, 112 are physically connected to the hot and cold fluid conduits 102, 104 of the combined district heating and cooling system 100. The verified thermal devices 106a, 106b, 112 may each have the status as verified. The verified thermal device 106a, 106b, 112, may be a thermal energy consumer assembly, a thermal energy generator assembly, a combined thermal energy consumer/generator assembly or the thermal server plant 112. Each verified thermal device 106a, 106b, 112 comprises one or more sensors 204 associated with the respective verified thermal device 106a, 106b, 112. The one or more sensors 204 are configured to measure a physical characteristic associated to the combined district heating and cooling system 100 to which the verified thermal device 106a, 106b, 112 is connected.

Both for the unverified and the verified thermal devices 106a, 106b, 112, 202, the one or more sensors 204 are typically arranged in the respective thermal device. Alternatively, or in combination, the one or more sensors 204 may be arranged in the hot fluid conduit 102 and/or cold fluid conduit 103 close to a connection between the respective thermal device 106a, 106b, 112, 202 and the hot fluid conduit 102 and/or cold fluid conduit 104. In this context "close" is to be interpreted as being sufficiently close to the respective thermal device 106a, 106b, 112, 202 so that measurements made by the respective one or more sensors 204 are representative for the respective thermal device 106a, 106b, 112, 202.

The one or more sensors 204 of a verified or an unverified thermal device 106a, 106b, 112, 202 may be a flow meter configured to measure a local fluid flow of the hot fluid conduit 102 and/or the cold fluid conduit 104. The flow meter may be configured to measure a direction of the flow and/or an amount of fluid flowing through the flow meter per unit time. Hence, the physical characteristic may be a local fluid flow of the hot fluid conduit 102 and/or a local fluid flow of the cold fluid conduit 104. In this context "local" is to be interpreted as being measured at the respective thermal device 106a, 106b, 112, 202.

Alternatively, or in combination, the one or more sensors 204 of a verified or an unverified thermal device 106a, 106b, 112, 202 may be a differential pressure meter configured to measure a local fluid differential pressure between the hot and the cold fluid conduits 102, 104. Hence, the physical characteristic may be a local fluid differential pressure between the hot and the cold conduit 102, 104. In this context "local" is to be interpreted as being measured at the respective thermal device 106a, 106b, 112, 202.

Alternatively, or in combination, the one or more sensors 204 of a verified or an unverified thermal device 106a, 106b, 112, 202 may be a temperature meter configured to measure a local fluid temperature of the hot fluid conduit 102 and/or the cold fluid conduit 104. Hence, the physical characteristic may be a local fluid temperature of the hot fluid conduit 102 and/or a local fluid temperature of the cold fluid conduit 104. In this context "local" is to be interpreted as being measured at the respective thermal device 106a, 106b, 112, 202.

A sensor 204 may be configured to measure physical characteristic over time and output and average of the measure over time. The time period for the measurement may be in the order of seconds, minutes or hours.

A sensor 204 may comprise a control unit. However, not all sensors 204 need to comprise a dedicated control unit. Hence, two or more sensors 204 may be controlled by the same control unit.

The combined district heating and cooling system 100 may further comprise a server 216. The server 216 is configured to act as a central control function for the combined district heating and cooling system 100. The server 216 may be configured to verify a physical connection of the unverified thermal device 202 to a specific combined heating and cooling system 100. The server 216 is configured to communicate with the one or more sensors 204 of the unverified thermal device 202. The server 216 is configured to communicate with the one or more sensors 204 of the verified thermal devices 106a, 106b, 112. The communication may be a wired or wireless communication. The server 216a and/or the sensors 204 may transmit/receive data over the communication. Especially, the server 216a is configured to receive data pertaining to the physical characteristic measured by a respective sensor 204 from the respective sensor 204.

According to one example, the server 216 may form part of a central control server configured to control the combined heating and cooling system 100. According to another example, one of the control units of a sensor 204 may form the server 216. Alternatively, the server may be distributed over a plurality of devices.

The physical characteristics measured by one or more sensors 204 associated to the verified thermal device 106a, 106b, 112 are referred to as reference data. The reference data may pertain to one or more physical characteristics. The one or more sensors 204 associated to the verified thermal device 106a, 106b, 112 is configured to transmit the reference data to the server 216. The physical characteristics measured by one or more sensors 204 associated to the unverified thermal device 202 are referred to as test data. The test data may pertain to one or more physical characteristics. The one or more sensors 204 associated to the unverified thermal device 202 is configured to transmit the test data to the server 216.

By analyzing the reference data and the test data, the server 216 is configured to determine if the unverified thermal device 202 is physically connected to the same combined district heating and cooling system 100 as the verified thermal device 106a, 106b, 112. In other words, the server 216 is configured to determine if the unverified thermal device 202 is physically connected to a specific combined district heating and cooling system 100. The specific combined district heating and cooling system 100 being the combined district heating and cooling system 100 the verified thermal device 106a, 106b, 112 is physically connected to. The analysis is based on a comparison between the test data and a comparison criterion. The comparison criterion is determined based on the reference data. The comparison criterion may be defined as an interval. The interval may be in the range of +/-5% of the reference data, preferably in the range of +/-3% of the reference data, more preferably in the range of +/-1% of the reference data. According to one example, upon the reference data comprises a local fluid temperature of X degrees Celsius, the comparison criterion may be fulfilled if the test data comprises a local fluid temperature of +/- 5% of X degrees Celsius. According to another example, upon the reference data comprises a local differential pressure of Y pascal, the comparison criterion may be fulfilled if the test data comprises a local differential pressure of +/- 5% of Y pascal. According to yet another example, upon the reference data comprises a local fluid temperature of X degrees Celsius and a local differential pressure of Y pascal, the comparison criterion may be fulfilled if the test data comprises a local differential pressure of +/- 5% of Y pascal and a local differential pressure of +/- 5% of Y pascal. It is realized that the reference data and the test data may comprise even more physical characteristics.

Upon the comparison criterion is fulfilled, the unverified thermal device 202 may be verified as physically connected to the specific combined district heating and cooling system 100. Upon the unverified thermal device 202 is verified as physically connected to the specific combined district heating and cooling system 100a, the status of the unverified thermal device 202 may be changed from unverified to verified. If that is the case, the unverified thermal device 202 may be added as a verified thermal device in a database of verified thermal device associated to the specific combined district heating and cooling system 100. The database may be comprised in the server 216. Upon the comparison criterion is not fulfilled, the unverified thermal device 202 may remain as unverified. Further, under such circumstance an error message may be sent to an operator, or to another server/database collecting error messages.

Further, each verified and unverified thermal device 106a, 106b, 112, 202 may be associated with a geographic location. The geographic location of a respective thermal device 106a, 106b, 112, 202 may be determined using a geographical positioning device comprised in the respective thermal device 106a, 106b, 112, 202. A non-limiting example of such a geographical positioning device is a GNSS (Global Navigation Satellite System)-receivers, such as for instance a GPS-receiver. Hence, the reference data may comprise a reference geographic location of the verified thermal device 106a, 106b, 112. Moreover, the test data may comprise a test geographic location of the unverified thermal device 202. Upon the reference data comprises geographic location of a plurality of verified thermal devices 106a, 106b, 112, 202 and the test data comprises geographic location of the unverified thermal device 202 one or more of the verified thermal devices 106a, 106b, 112, 202 to be used as the verified thermal device from which the reference data is to be used may be chosen. The choice may be based on finding the verified thermal device being closest in distance from the unverified thermal device 202. Hence, the test geographic location of the unverified thermal device 202 may be compared with the reference geographic location of each of the plurality of verified thermal devices. Then the verified thermal device, among the plurality of verified thermal device, being the one geographically closest to the unverified thermal device 202 may be identified as the verified thermal device from which the reference data is to be used.

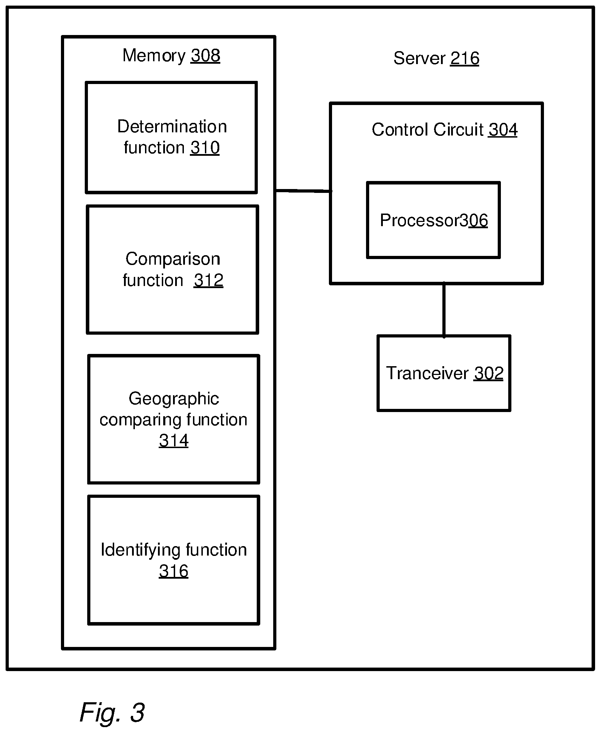

In connection with Fig. 3, a schematic view of the server 216 configured to receive and analyze the test data and the reference data will be discussed. The server 216 comprises a transceiver 302, a control unit 304 and a memory 308.

The transceiver 302 is configured to communicate with the sensors 204 of the verified and unverified thermal devices 106a, 106b, 112, 202. The communication may be directly with the respective sensor 204. Alternatively, or in combination, the communication may be with a controller of the respective thermal device 106a, 106b, 112, 202. The latter if the controller of the respective thermal device 106a, 106b, 112, 202 is configured to relay communication from the respective sensor 204. Hence, the transceiver 302 enables the server 216 to establish communications with other device, such as the sensors 204 of thermal devices 106a, 106b, 112, 202. The communications may include data transfers, and the like. Data transfers may include, but are not limited to, downloading and/or uploading data and receiving or sending messages. The data may be processed by the server 216 and/or the thermal devices 106a, 106b, 112, 202. The processing may include storing the data in a memory, e.g. the memory 308 of the server 216, executing operations or function, and so forth.

The control circuit 304 is configured to carry out overall control of functions and operations of the server 216. The control circuit 304 may include a processor 306, such as a central processing unit (CPU), microcontroller, or microprocessor. The processor 306 is configured to execute program code stored in the memory 308, in order to carry out functions and operations of the server 216.

The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long term data storage and a volatile memory that functions as system memory for the control circuit 304. The memory 308 may exchange data with the control circuit 304 over a data bus. Accompanying control lines and an address bus between the memory 308 and the control circuit 304 also may be present.

Functions and operations of the server 216 may be embodied in the form of executable logic routines (e.g., lines of code, software programs, etc.) that are stored on a non-transitory computer readable medium (e.g., the memory 308) of the server 216 and are executed by the control circuit 304 (e.g., using the processor 306). Furthermore, the functions and operations of the server 216 may be a stand-alone software application or form a part of a software application that carries out additional tasks related to the server 216. The described functions and operations may be considered a method that the corresponding device is configured to carry out. Also, while the described functions and operations may be implemented in software, such functionality may as well be carried out via dedicated hardware or firmware, or some combination of hardware, firmware and/or software.

The control circuit 304 may execute a determination function 310. The determination function 310 is configured to determine the comparison criterion based on the reference data. The comparison criterion is discussed in further detail above. In order to avoid undue repetition reference is made to the discussion above.

The control circuit 304 may further execute a comparison function 312. The comparison function 312 is configured to compare the test data with the comparison criterion. Upon the comparison criterion is fulfilled, the comparison function 312 is configured to verify unverified thermal device 202 as being physically connected to the specific combined district heating and cooling system 100. The fulfillment of the comparison criterion is discussed in further detail above. In order to avoid undue repetition reference is made to the discussion above.

Upon the reference data and the test data comprises the reference geographic location and the test geographic location, respectively, the control circuit 304 may further execute a geographic comparing function 314. The geographic comparing function 314 is configured to compare the test geographic location of the unverified thermal device 202 with the reference geographic location of each of the plurality of verified thermal devices 106a, 106b, 112. The output from the geographic comparing function 314 may be a geographical distance between the unverified thermal device 202 and each of the plurality of verified thermal devices 106a, 106b, 112.

The control circuit 304 may execute an identifying function 316. The identifying function 316 is configured to identify the verified thermal device 106a, 106b among the plurality of verified thermal device 106a, 106b, 112 being the one geographically closest to the unverified thermal device 202 as the verified thermal device 106a, 106b, 112.

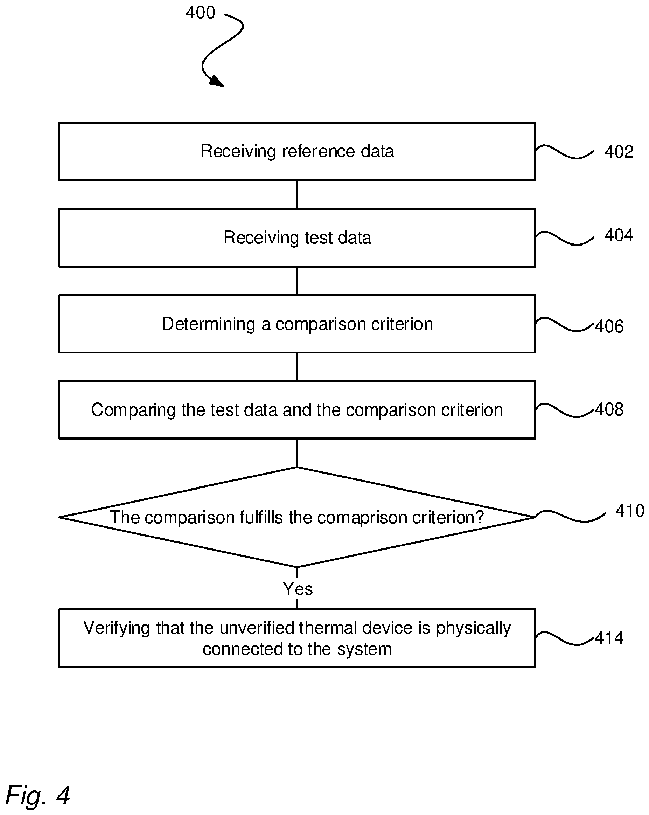

In connection with Fig. 4 a flow chart illustrating a method 400 for verifying a physical connection of an unverified thermal device 202 to a specific combined district heating and cooling system 100. The method 400 comprises receiving 402 reference data and receiving 404 test data. The reference data is received from one or more sensors associated with a verified thermal device 106a, 106b, 112. The verified thermal device 106a, 106b, 112 is already verified as physically connected to the specific combined district heating and cooling system 100. The test data is received from one or more sensors associated with the unverified thermal device 202. The reference data and the test data pertains to one or more physical characteristics of the combined district heating and cooling system 100 to which the respective verified and unverified thermal device is physically connected.

The method 400 further comprise determining 406 a comparison criterion based on the reference data. The comparison criterion is discussed in further detail above. In order to avoid undue repetition reference is made to the discussion above.

The method 400 further comprise comparing 408 the test data and the comparison criterion. Upon the comparison criterion is fulfilled 410, the unverified thermal device 202 is verified 414 as being physically connected to the specific combined district heating and cooling system 100. Further, upon the comparison criterion is fulfilled 410 a status of the unverified thermal device 202 may be changed from unverified to verified. The fulfillment of the comparison criterion is discussed in further detail above. In order to avoid undue repetition reference is made to the discussion above.

The method may further comprise, upon the comparison criterion is not fulfilled remaining the unverified thermal device as unverified. In connection with this, an error message may be sent to an operator. Alternatively, the verification method may be run again. But this time reference data pertaining to a physical characteristic associated to another specific combined district heating and cooling system received from a verified thermal device already verified as physically connected to the another specific combined district heating and cooling system may be used.

In case the system comprises a plurality of verified thermal devices 106a, 106b, 112, one of the plurality of verified thermal devices 106a, 106b, 112 may be selected as the one form which the reference data for determining the comparison criterion is to be received. A criterion for doing the selection may be that the reference data and the test data comprises a respective geographic location, i.e. reference geographic location and test geographic location. Reference data, from a plurality of verified thermal devices already verified as physically connected to the specific combined district heating and cooling system may be received. The test geographic location of the unverified thermal device may be compared with the reference geographic location of each of the plurality of verified thermal devices. The verified thermal device among the plurality of verified thermal device being the one geographically closest to the unverified thermal device may be identified as the verified thermal device from which the reference data for determining the comparison criterion is to be received. By identifying the geographically closest verified thermal device 106a, 106b, 112 in relation to the unverified thermal device 202, the verification method may be more accurate. The closer the locations of where the test data and the reference data are measured the more accurate the comparison may become. This because the measured physical characteristics may vary within the combined district heating and cooling system 100. For example, the differential pressure between the hot fluid conduit 102 and the cold fluid conduit 104 may vary along the thermal energy circuit. Moreover, the temperature of the fluid in the hot fluid conduit 102 and/or in the fluid of the cold fluid conduit 104 may vary along the thermal energy circuit. Furthermore, the flow and/or the flow direction of the fluid in the hot fluid conduit 102 and/or in the fluid of the cold fluid conduit 104 may vary along the thermal energy circuit.

These steps of the method may be performed in any order suitable.

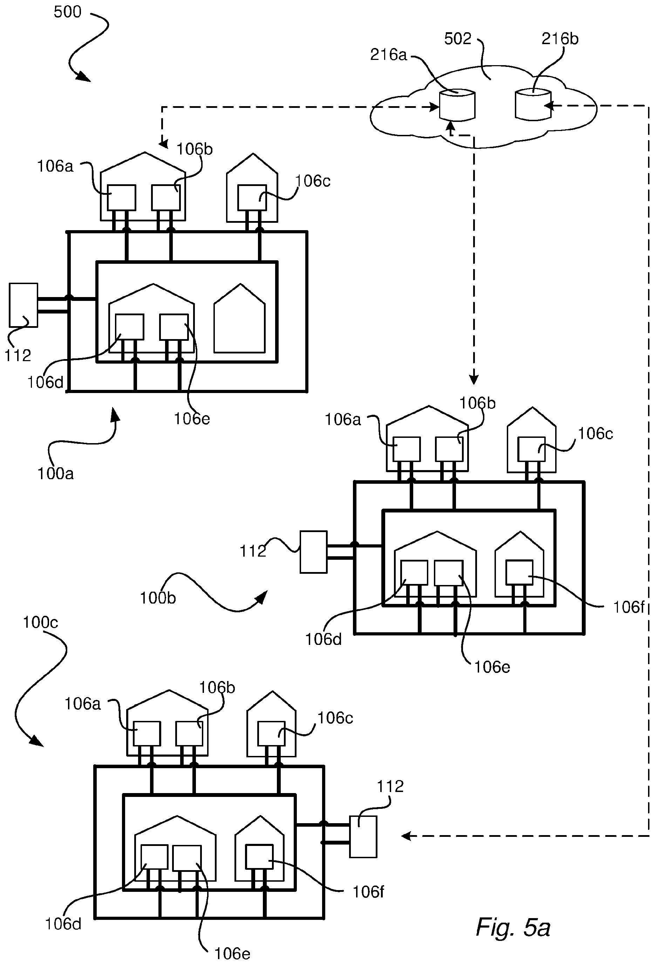

In figure 5a, it is illustrated a composition 500 of several combined district heating and cooling systems 100a, 100b, 100c. In line with the combined district heating and cooling system 100 illustrated in Fig. 1, each combined district heating and cooling systems 100a, 100b, 100c comprise a plurality of thermal devices 106a-e and a thermal server plant 112. Further, the composition 500 may also comprise an arrangement 502 of servers. The arrangement 502 of servers may comprise a plurality of servers 216a, 216b. In this particular example, a first server 216a is controlling a first and a second combined district heating and cooling system 100a, 100b and a second server 216b is controlling a third combined district heating and cooling system 100c. It should be noted that a specific server 216 may control one or more combined district heating and cooling systems 100a, 100b, 100c. The servers 216a, 216b of the arrangement 502 of servers may communicate with each other. The communications may include data transfers, and the like. Data transfers may include, but are not limited to, downloading and/or uploading data and receiving or sending messages. The data may be processed by the individual server 216a, 216b. The processing may include storing the data in a memory executing operations or function, and so forth.

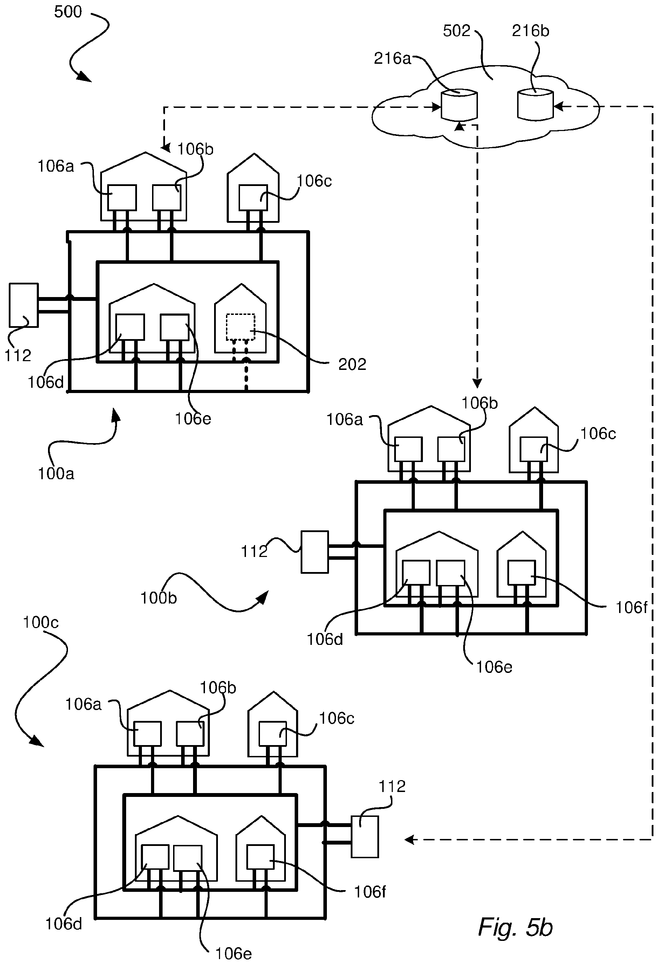

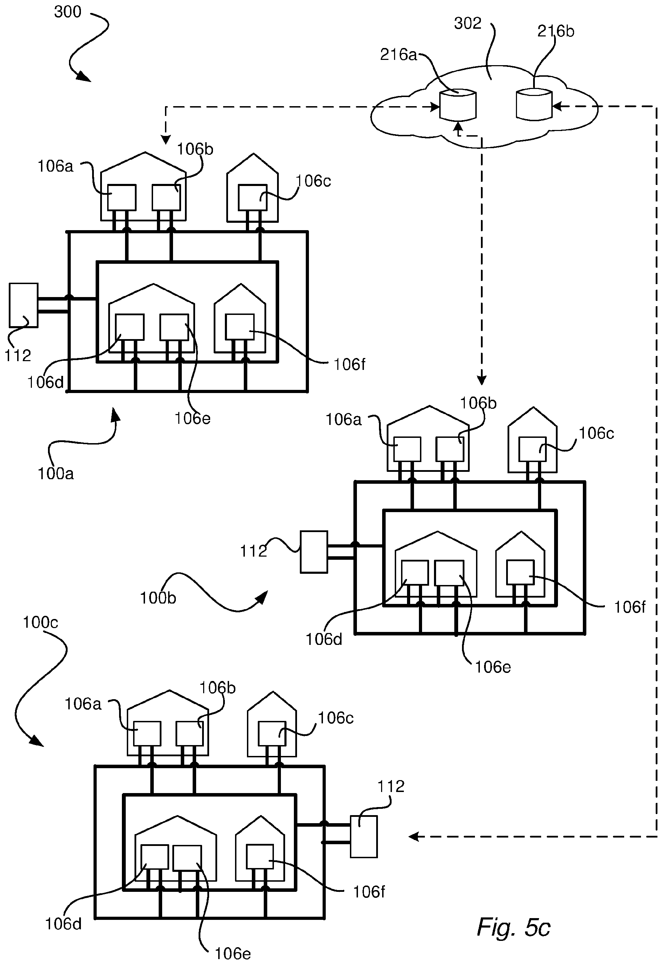

In figure 5b, a composition 500 of several combined district heating and cooling systems 100a, 100b, 100c as illustrated in figure 3a is illustrated with the addition of one unverified thermal device 202. In this particular example the unverified thermal device 202 is connected to a first combined district heating and cooling system 100a controlled by a first server 216a. The first server 216a is controlling the plurality of verified thermal devices 106a-e connected to the first combined district heating and cooling system 100a. The unverified thermal device 202 may communicate with the first server 216a according to any of the methods described above in connection with Figs 2-4 and the first server 216a may verify the unverified thermal device 202 as connected to the first combined district heating and cooling system 100a. Upon the unverified thermal device 202 being verified as physically connected to the first combined district heating and cooling system 100a the first server 216a may control the now verified thermal device 106f, see figure 5c. Hence, the status of the unverified thermal device 202 may be changed from unverified to verified. This verified thermal device will henceforth be referred to as verified thermal device 106f.

Figures 3a, 3b and 3c are illustrating that the composition 500 of combined district heating and cooling systems 100a, 100b, 100c may be a scalable system where new thermal devices may be added to a specific combined district heating and cooling system once new buildings are built. Further, new combined district heating and cooling systems may be added upon for example a new area in a city is developed. A new combined district heating and cooling system may be controlled be a new server 216 or by an already existing server 216.

The person skilled in the art realizes that the present invention by no means is limited to the preferred embodiments described above. On the contrary, many modifications and variations are possible within the scope of the appended claims.

For example, alternatively, or in combination, the one or more sensors 204 of a verified or an unverified thermal device 106a, 106b, 112, 202 may be a meter configured to measure a percentage of a substance in the fluid of the combined district heating and cooling system 100. According to non-limiting examples the substance may be an isotope or DNA. The substance may be added to the fluid of the combined district heating and cooling system 100. Hence, different combined district heating and cooling systems 100 may comprise different substances and/or the same substance at different percentages. The sensor in the form of a meter configured to measure a percentage of a substance in the fluid of the combined district heating and cooling system 100 may form the verified thermal device. Such a sensor may be a stand-alone sensor not associated with any other thermal device.

## Claims

1. A method for verifying a physical connection of an unverified thermal device (202) to a specific combined district heating and cooling system (100), wherein the specific combined district heating and cooling system (100) comprises a hot fluid conduit (102) for transporting hot fluid, and a cold fluid conduit (104) for transporting cold fluid, wherein, during operation, the hot fluid is warmer than the cold fluid, the method comprising:
receiving (402), from a verified thermal device (106a-e, 112) already verified as physically connected to the specific combined district heating and cooling system (100), reference data pertaining to a physical characteristic associated to the specific combined district heating and cooling system (100), wherein the reference data is measured by one or more sensors (204) associated to the verified thermal device (106a, 106b, 112);
receiving (404), from the unverified thermal device (202), test data pertaining to a physical characteristic of a combined district heating and cooling system (100) the unverified thermal device (202) is connected to, wherein the test data is measured by one or more sensors (204) associated to the unverified thermal device (202);
determining (406) a comparison criterion based on the reference data; and
comparing (408) the test data and the comparison criterion;
upon the comparison fulfills (410) the comparison criterion, verifying (412) that the unverified thermal device (202) is physically connected to the specific combined district heating and cooling system (100).

2. The method according to claim 1, wherein upon the comparison does not fulfills the comparison criterion, remaining the unverified thermal device as unverified.

3. The method according to claim 1 or 2, wherein the physical characteristic is one or more of: a local fluid differential pressure between the hot and the cold conduits (102,104), a local fluid temperature of the hot fluid conduit (102), a local fluid temperature of the cold fluid conduit (104), a local fluid flow of the hot fluid conduit (102), a local fluid flow of the cold fluid conduit (102) and a percentage of a substance in the fluid of the combined district heating and cooling system (100).

4. The method according to any one of claims 1-3, wherein the verified thermal device is one of a thermal energy consumer assembly, a thermal energy generator assembly, a combined thermal energy consumer and generator assembly or a thermal server plant, wherein the verified thermal device comprises a sensor configured to measure the physical characteristic associated to the specific combined district heating and cooling system (100).

5. The method according to any one of claims 1-4, wherein the comparison criterion is defined as an interval based on the reference data.

6. The method according to any one of claims 1-5, wherein the reference data further comprises a reference geographic location of the verified thermal device and the test data further comprises a test geographic location of the unverified thermal device.

7. The method according to claim 6, wherein the act of receiving (402), from a verified thermal device (106a-e, 112) already verified as physically connected to the specific combined district heating and cooling system (100), reference data pertaining to a physical characteristic associated to the specific combined district heating and cooling system (100) comprises:
receiving reference data, from a plurality of verified thermal devices (106a-e, 112) already verified as physically connected to the specific combined district heating and cooling system (100);
comparing the test geographic location of the unverified thermal device (202) with the reference geographic location of each of the plurality of verified thermal devices (106a-e); and
identifying the verified thermal device (106a-e, 112) among the plurality of verified thermal device (106a-e, 112) being the one geographically closest to the unverified thermal device (202) as the verified thermal device (106a-e, 112).

8. The method according to any one of claims 1-7, wherein the reference data pertains to a plurality of physical characteristics associated to the specific combined district heating and cooling system (100) and the test data pertains to a plurality of physical characteristics of the combined district heating and cooling system (100) the unverified thermal device (202) is connected to.

9. A server configured to verify a physical connection of an unverified thermal device (202) to a specific combined district heating and cooling system (100), wherein the specific combined district heating and cooling system (100) comprises a hot fluid conduit (102) for transporting hot fluid, and a cold fluid conduit (104) for transporting cold fluid, wherein, during operation, the hot fluid is warmer that the cold fluid,
the server comprising:
a transceiver (302) configured to:
from a verified thermal device (106a-e) physically connected to the specific combined district heating and cooling system (100), receive reference data pertaining to a physical characteristic associated to the specific combined district heating and cooling system (100), wherein the reference data is measured by one or more sensors (204) associated to the verified thermal device (106a, 106b, 112);
from an unverified thermal device (202), receive test data pertaining to a physical characteristic of the combined district heating and cooling system (100) the unverified thermal device (202) is connected to, wherein the test data is measured by one or more sensors (204) associated to the unverified thermal device (202); and
a control circuit (304) configured to execute:
a determination function (310) configured to determine a comparison criterion based on the reference data;
a comparison function (312) configured to compare the test data with the comparison criterion, and upon the comparison fulfills the comparison criterion, verify that the unverified thermal device (202) is physically connected to the specific combined district heating and cooling system (100).

10. The server according to claim 9,
wherein the transceiver (302) is further configured to, from each of a plurality of verified thermal devices (106a-e, 112) connected to the specific combined district heating and cooling system (100), receive the reference data, wherein the reference data further comprises a reference geographic location of the verified thermal device;
wherein the test data further comprises a test geographic location of the unverified thermal device; and
wherein the control circuit (304) is further configured to execute:
a geographic comparing function (314) configured to compare the test geographic location of the unverified thermal device (202) with the reference geographic location of each of the plurality of verified thermal devices (106a-e); and
an identifying function (316) configured to identify the verified thermal device (106a-e) among the plurality of verified thermal device (106a-e, 112) being the one geographically closest to the unverified thermal device (202) as the verified thermal device (106a-e, 112).

11. A non-transitory computer readable recording medium having computer readable program code recorded thereon which when executed on a device having processing capability is configured to perform the method of any one of claims 1-8.

## Patentansprüche

1. Verfahren zur Verifizierung einer physikalischen Verbindung einer nichtverifizierten thermischen Vorrichtung (202) mit einem spezifischen kombinierten Fernwärme- und -kältesystem (100), wobei das spezifische kombinierte Fernwärme- und -kältesystem (100) eine Heißfluidleitung (102) zum Transportieren von heißem Fluid und eine Kaltfluidleitung (104) zum Transportieren von kaltem Fluid umfasst, wobei während des Betriebs das heiße Fluid wärmer als das kalte Fluid ist, wobei das Verfahren umfasst:
Empfangen (402), von einer verifizierten thermischen Vorrichtung (106a-e, 112), die bereits als mit dem spezifischen kombinierten Fernwärme- und -kältesystem (100) physikalisch verbunden verifiziert worden ist, von Referenzdaten, die sich auf eine physikalische Kenngröße beziehen, die dem spezifischen kombinierten Fernwärme- und -kältesystem (100) zugeordnet ist, wobei die Referenzdaten von einem oder mehreren Sensoren (204) gemessen werden, die der verifizierten thermischen Vorrichtung (106a, 106b, 112) zugeordnet sind;
Empfangen (404), von der nichtverifizierten thermischen Vorrichtung (202), von Testdaten, die sich auf eine physikalische Kenngröße eines kombinierten Fernwärme- und -kältesystems (100) beziehen, mit dem die nichtverifizierte thermische Vorrichtung (202) verbunden ist, wobei die Testdaten von einem oder mehreren Sensoren (204) gemessen werden, die der nichtverifizierten thermischen Vorrichtung (202) zugeordnet sind;
Bestimmen (406) eines Vergleichskriteriums, das auf den Referenzdaten basiert; und
Vergleichen (408) der Testdaten und des Vergleichskriteriums;
falls der Vergleich das Vergleichskriterium erfüllt (410), Verifizieren (412), dass die nichtverifizierte thermische Vorrichtung (202) mit dem spezifischen kombinierten Fernwärme- und -kältesystem (100) physikalisch verbunden ist.

2. Verfahren nach Anspruch 1, wobei, falls der Vergleich das Vergleichskriterium nicht erfüllt, die nichtverifizierte thermische Vorrichtung als nichtverifiziert belassen wird.

3. Verfahren nach Anspruch 1 oder 2, wobei die physikalische Kenngröße eines oder mehreres ist von: einem lokalen Fluid-Differenzdruck zwischen der Heiß- und der Kaltfluidleitung (102, 104), eine lokale Fluidtemperatur der Heißfluidleitung (102), eine lokale Fluidtemperatur der Kaltfluidleitung (104), ein lokaler Fluiddurchfluss der Heißfluidleitung (102), ein lokaler Fluiddurchfluss der Kaltfluidleitung (104) und ein prozentualer Anteil eines Stoffes im Fluid des kombinierten Fernwärme- und -kältesystems (100).

4. Verfahren nach einem der Ansprüche 1 - 3, wobei die verifizierte thermische Vorrichtung eines oder mehreres ist von einer Wärmeenergieverbraucher-Anordnung, einer Wärmeenergieerzeuger-Anordnung, einer kombinierten Wärmeenergieverbraucher- und -erzeuger-Anordnung oder einer Wärmebereitstellungsanlage, wobei die verifizierte thermische Vorrichtung einen Sensor umfasst, der dafür ausgelegt ist, die physikalische Kenngröße zu messen, die dem spezifischen kombinierten Fernwärme- und -kältesystem (100) zugeordnet ist.

5. Verfahren nach einem der Ansprüche 1 - 4, wobei das Vergleichskriterium als ein Intervall definiert ist, das auf den Referenzdaten basiert.

6. Verfahren nach einem der Ansprüche 1 - 5, wobei die Referenzdaten ferner einen geographischen Referenzort der verifizierten thermischen Vorrichtung umfassen und die Testdaten ferner einen geographischen Testort der nichtverifizierten thermischen Vorrichtung umfassen.

7. Verfahren nach Anspruch 6, wobei der Vorgang des Empfangens (402), von einer verifizierten thermischen Vorrichtung (106a-e, 112), die bereits als mit dem spezifischen kombinierten Fernwärme- und -kältesystem (100) physikalisch verbunden verifiziert worden ist, von Referenzdaten, die sich auf eine physikalische Kenngröße beziehen, die dem spezifischen kombinierten Fernwärme- und -kältesystem (100) zugeordnet ist, umfasst:
Empfangen von Referenzdaten von mehreren verifizierten thermischen Vorrichtungen (106a-e, 112), die bereits als mit dem spezifischen kombinierten Fernwärme- und -kältesystem (100) physikalisch verbunden verifiziert worden sind;
Vergleichen des geographischen Testortes der nichtverifizierten thermischen Vorrichtung (202) mit dem geographischen Referenzort jeder der mehreren verifizierten thermischen Vorrichtungen (106a-e); und
Identifizieren derjenigen verifizierten thermischen Vorrichtung (106a-e, 112) unter den mehreren verifizierten thermischen Vorrichtungen (106a-e, 112), die der nichtverifizierten thermischen Vorrichtung (202) geographisch am nächsten ist, als die verifizierte thermische Vorrichtung (106a-e, 112).

8. Verfahren nach einem der Ansprüche 1 - 7, wobei sich die Referenzdaten auf mehrere physikalische Kenngrößen beziehen, die dem spezifischen kombinierten Fernwärme- und -kältesystem (100) zugeordnet sind, und die Testdaten sich auf mehrere physikalische Kenngrößen des kombinierten Fernwärme- und -kältesystems (100) beziehen, mit dem die nichtverifizierte thermische Vorrichtung (202) verbunden ist.

9. Server, welcher dafür ausgelegt ist, eine physikalische Verbindung einer nichtverifizierten thermischen Vorrichtung (202) mit einem spezifischen kombinierten Fernwärme- und -kältesystem (100) zu verifizieren, wobei das spezifische kombinierte Fernwärme- und -kältesystem (100) eine Heißfluidleitung (102) zum Transportieren von heißem Fluid und eine Kaltfluidleitung (104) zum Transportieren von kaltem Fluid umfasst, wobei während des Betriebs das heiße Fluid wärmer als das kalte Fluid ist, wobei der Server umfasst:
einen Sendeempfänger (302), der dafür ausgelegt ist:
von einer verifizierten thermischen Vorrichtung (106a-e), die mit dem spezifischen kombinierten Fernwärme- und -kältesystem (100) physikalisch verbunden ist, Referenzdaten zu empfangen, die sich auf eine physikalische Kenngröße beziehen, die dem spezifischen kombinierten Fernwärme- und -kältesystem (100) zugeordnet ist, wobei die Referenzdaten von einem oder mehreren Sensoren (204) gemessen werden, die der verifizierten thermischen Vorrichtung (106a, 106b, 112) zugeordnet sind;
von einer nichtverifizierten thermischen Vorrichtung (202) Testdaten zu empfangen, die sich auf eine physikalische Kenngröße des kombinierten Fernwärme- und -kältesystems (100) beziehen, mit dem die nichtverifizierte thermische Vorrichtung (202) verbunden ist, wobei die Testdaten von einem oder mehreren Sensoren (204) gemessen werden, die der nichtverifizierten thermischen Vorrichtung (202) zugeordnet sind;
und
eine Steuerschaltung (304), die dafür ausgelegt ist auszuführen:
eine Bestimmungsfunktion (310), die dafür ausgelegt ist, ein Vergleichskriterium zu bestimmen, das auf den Referenzdaten basiert;
eine Vergleichsfunktion (312), die dafür ausgelegt ist, die Testdaten mit dem Vergleichskriterium zu vergleichen, und falls der Vergleich das Vergleichskriterium erfüllt, zu verifizieren, dass die nichtverifizierte thermische Vorrichtung (202) mit dem spezifischen kombinierten Fernwärme- und -kältesystem (100) physikalisch verbunden ist.

10. Server nach Anspruch 9,
wobei der Sendeempfänger (302) ferner dafür ausgelegt ist, von jeder von mehreren verifizierten thermischen Vorrichtungen (106a-e, 112), die mit dem spezifischen kombinierten Fernwärme- und -kältesystem (100) verbunden sind, die Referenzdaten zu empfangen, wobei die Referenzdaten ferner einen geographischen Referenzort der verifizierten thermischen Vorrichtung umfassen;
wobei die Testdaten ferner einen geographischen Testort der nichtverifizierten thermischen Vorrichtung umfassen; und
wobei die Steuerschaltung (304) ferner dafür ausgelegt ist auszuführen:
eine geographische Vergleichsfunktion (314), die dafür ausgelegt ist, den geographischen Testort der nichtverifizierten thermischen Vorrichtung (202) mit dem geographischen Referenzort jeder der mehreren verifizierten thermischen Vorrichtungen (106a-e) zu vergleichen; und
eine Identifizierungsfunktion (316), die dafür ausgelegt ist, diejenige verifizierte thermische Vorrichtung (106a-e) unter den mehreren verifizierten thermischen Vorrichtungen (106a-e, 112), die der nichtverifizierten thermischen Vorrichtung (202) geographisch am nächsten ist, als die verifizierte thermische Vorrichtung (106a-e, 112) zu identifizieren.

11. Nichtflüchtiges computerlesbares Speichermedium mit darauf aufgezeichnetem computerlesbarem Programmcode, welcher, wenn er auf einer Vorrichtung mit Verarbeitungsfähigkeiten ausgeführt wird, dafür ausgelegt ist, das Verfahren nach einem der Ansprüche 1 - 8 auszuführen.

## Revendications

1. Procédé de vérification d'une connexion physique d'un dispositif thermique non vérifié (202) à un système combiné spécifique de chauffage et de refroidissement urbain (100), dans lequel le système combiné spécifique de chauffage et de refroidissement urbain (100) comprend un conduit de fluide chaud (102) destiné à transporter un fluide chaud, et un conduit de fluide froid (104) destiné à transporter un fluide froid, dans lequel, pendant le fonctionnement, le fluide chaud est plus chaud que le fluide froid, le procédé comprenant :
la réception (402), à partir d'un dispositif thermique vérifié (106a-e, 112) déjà vérifié comme étant raccordé physiquement au système combiné spécifique de chauffage et de refroidissement urbain (100), de données de référence relatives à une caractéristique physique associée au système combiné spécifique de chauffage et de refroidissement urbain (100), dans lequel les données de référence sont mesurées par un ou plusieurs capteurs (204) associés au dispositif thermique vérifié (106a, 106b, 112) ;
la réception (404), à partir du dispositif thermique non vérifié (202), de données de test relatives à une caractéristique physique d'un système combiné de chauffage et de refroidissement urbain (100) auquel le dispositif thermique non vérifié (202) est connecté, dans lequel les données de test sont mesurées par un ou plusieurs capteurs (204) associés au dispositif thermique non vérifié (202) ;
la détermination (406) d'un critère de comparaison sur la base des données de référence ; et
la comparaison (408) des données de test et du critère de comparaison ;
lorsque la comparaison remplit (410) le critère de comparaison, la vérification (412) que le dispositif thermique non vérifié (202) est raccordé physiquement au système combiné spécifique de chauffage et de refroidissement urbain (100).

2. Procédé selon la revendication 1, dans lequel, lorsque la comparaison ne remplit pas le critère de comparaison, le dispositif thermique non vérifié reste non vérifié.

3. Procédé selon la revendication 1 ou 2, dans lequel la caractéristique physique est l'une ou plusieurs parmi : une pression différentielle locale de fluide entre les conduits chaud et froid (102, 104), une température de fluide locale du conduit de fluide chaud (102), une température de fluide locale du conduit de fluide froid (104), un écoulement de fluide local du conduit de fluide chaud (102), un écoulement de fluide local du conduit de fluide froid (104) et un pourcentage d'une substance dans le fluide du système combiné de chauffage et de refroidissement urbain (100).

4. Procédé selon l'une quelconque des revendications 1 à 3, dans lequel le dispositif thermique vérifié est l'un parmi un ensemble de consommateur d'énergie thermique, un ensemble de générateur d'énergie thermique, un ensemble combiné de consommateur et de générateur d'énergie thermique ou une installation de serveur thermique, dans lequel le dispositif thermique vérifié comprend un capteur configuré pour mesurer la caractéristique physique associée au système combiné spécifique de chauffage et de refroidissement urbain (100).

5. Procédé selon l'une quelconque des revendications 1 à 4, dans lequel le critère de comparaison est défini comme un intervalle basé sur les données de référence.

6. Procédé selon l'une quelconque des revendications 1 à 5, dans lequel les données de référence comprennent en outre un emplacement géographique de référence du dispositif thermique vérifié et les données de test comprennent en outre un emplacement géographique de test du dispositif thermique non vérifié.

7. Procédé selon la revendication 6, dans lequel l'étape de réception (402), à partir d'un dispositif thermique vérifié (106a-e, 112) déjà vérifié comme étant raccordé physiquement au système combiné spécifique de chauffage et de refroidissement urbain (100), de données de référence relatives à une caractéristique physique associée au système combiné spécifique de chauffage et de refroidissement urbain (100) comprend :
la réception de données de référence, à partir d'une pluralité de dispositifs thermiques vérifiés (106a-e, 112) déjà vérifiés comme étant connectés physiquement au système combiné spécifique de chauffage et de refroidissement urbain (100) ;
la comparaison de l'emplacement géographique de test du dispositif thermique non vérifié (202) avec l'emplacement géographique de référence de chacun parmi la pluralité de dispositifs thermiques vérifiés (106a-e) ; et
l'identification, parmi la pluralité de dispositifs thermiques vérifiés (106a-e, 112), du dispositif thermique vérifié (106a-e, 112) géographiquement le plus proche du dispositif thermique non vérifié (202), en tant que dispositif thermique vérifié (106a-e, 112).

8. Procédé selon l'une quelconque des revendications 1 à 7, dans lequel les données de référence concernent une pluralité de caractéristique physique associées au système combiné spécifique de chauffage et de refroidissement urbain (100) et les données de test concernent une pluralité de caractéristique physique du système combiné de chauffage et de refroidissement urbain (100) auquel est connecté le dispositif thermique non vérifié (202).

9. Serveur configuré pour vérifier une connexion physique d'un dispositif thermique non vérifié (202) à un système combiné spécifique de chauffage et de refroidissement urbain (100),
dans lequel le système combiné spécifique de chauffage et de refroidissement urbain (100) comprend un conduit de fluide chaud (102) destiné à transporter un fluide chaud, et un conduit de fluide froid (104) destiné à transporter un fluide froid, dans lequel, pendant le fonctionnement, le fluide chaud est plus chaud que le fluide froid,
le serveur comprenant :
un émetteur-récepteur (302) configuré pour :
à partir d'un dispositif thermique vérifié (106a-e) connecté physiquement au système combiné spécifique de chauffage et de refroidissement urbain (100), recevoir des données de référence relatives à une caractéristique physique associée au système combiné spécifique de chauffage et de refroidissement urbain (100), dans lequel les données de référence sont mesurées par un ou plusieurs capteurs (204) associés au dispositif thermique vérifié (106a, 106b, 112) ;
à partir d'un dispositif thermique non vérifié (202), recevoir des données de test relatives à une caractéristique physique du système combiné de chauffage et de refroidissement urbain (100) auquel le dispositif thermique non vérifié (202) est connecté, dans lequel les données de test sont mesurées par un ou plusieurs capteurs (204) associés au dispositif thermique non vérifié (202) ;
un circuit de commande (304) configuré pour exécuter :
une fonction de détermination (310) configurée pour déterminer un critère de comparaison sur la base des données de référence ;
une fonction de comparaison (312) configurée pour comparer les données de test avec le critère de comparaison, et lorsque la comparaison remplit le critère de comparaison, vérifier que le dispositif thermique non vérifié (202) est connecté physiquement au système combiné spécifique de chauffage et de refroidissement urbain (100).

10. Serveur selon la revendication 9,
dans lequel l'émetteur-récepteur (302) est en outre configuré pour, à partir de chacun parmi une pluralité de dispositifs thermiques vérifiés (106a-e, 112) connectés au système combiné spécifique de chauffage et de refroidissement urbain (100), recevoir les données de référence, dans lequel les données de référence comprennent en outre un emplacement géographique de référence du dispositif thermique vérifié ;
dans lequel les données de test comprennent en outre un emplacement géographique de test du dispositif thermique non vérifié ; et
dans lequel le circuit de commande (304) est en outre configuré pour exécuter :
une fonction de comparaison géographique (314) configurée pour comparer l'emplacement géographique de test du dispositif thermique non vérifié (202) avec l'emplacement géographique de référence de chacun parmi la pluralité de dispositifs thermiques vérifiés (106a-e) ; et
une fonction d'identification (316) configurée pour identifier, parmi la pluralité de dispositifs thermiques vérifiés (106a-e, 112), le dispositif thermique vérifié (106a-e) géographiquement le plus proche du dispositif thermique non vérifié (202), en tant que dispositif thermique vérifié (106a-e, 112).

11. Support de stockage lisible par ordinateur non transitoire comportant un code de programme lisible par ordinateur stocké sur celui-ci, lequel est configuré pour mettre en oeuvre le procédé selon l'une quelconque des revendications 1 à 8 lorsqu'il est exécuté sur un dispositif présentent une capacité de traitement.
